# EUROPEAN PATENT APPLICATION

(11) **EP 1 197 138 A1**
(43) Date of publication of application: **17.04.2002**
(21) Application number: 00600003.8
(22) Date of filing: 12.10.2000
(51) Int. Cl.: A01G 15/00

(54) **Process and system for influencing the atmospheric circulation**

(71) Applicant: Pissas, Nikolaos, Lemesos (CY); Uibo, Valeriy, Lemesos (CY); Olin, Vladimir, Lemesos (CY); Dadamiants, Vladislar, Lemesos (CY); Mokrouchina, Irina, Lemesos (CY)
(72) Inventor: Pissas, Nikolaos, Lemesos (CY); Uibo, Valeriy, Lemesos (CY); Olin, Vladimir, Lemesos (CY); Dadamiants, Vladislar, Lemesos (CY); Mokrouchina, Irina, Lemesos (CY)
(74) Representative: Pephani, Mata

(57) **Abstract**

Practical use of the invention makes possible realization of correction of weather conditions in the large territories in a wide range: the increase or reduction of deposits, struggle with the abnormal weather phenomena etc. For realization of the invention is not required of expensive technical structures. Thus the ecological safety will be observed.

## Description

### Technical field to which invention relates

Way of influence on process of atmospheric circulation and system for its realization concern to meteorology, namely to active influences on meteorological processes and can be used in technical works on management of weather and change of a climate in separate regions.

### Background art and assessment thereof (with citations)

From bases of meteorology follows, that the formation of weather and climatic conditions on the Earth occurs under influence of atmospheric processes caused by circulation of air weights, which is a consequence of alignment of baric gradients arising because of non-uniform warm-up of a terrestrial surface and of a ground air layer. (Lorentc E " A Nature and theory of general power of circulation in an atmosphere ". Leningrad. Gidrometizdat. 1970)
Alongside with chaotic movings of air flows in an atmosphere there are steady processes having certain law of occurrence and development (ascending and descending vertical flows, fronts, cyclones, anticyclones, jet currents etc.)
The active influences on atmospheric circulation on a global scale now are failed because of absence of the technical decision of this difficult problem, however there are theoretical substantiations of an opportunity of influence on atmospheric circulation in local areas, including on intensity of cyclones and anticyclones and on a trajectory of their moving, with the purpose of change of a temperature mode and quantity of dropping out deposits in the given areas. In particular is designed, that the change of the sizes of the area of cloudy fields influences course of thermodynamic processes in an atmosphere and by that on evolution of cyclones and anti-cyclones.
( Borisenko E.P. "A condition and problems of power of atmospheric processes. Problems of modern meteorology." Leningrad. Gidrometizdat. 1997)
Thus, influence on cloudy fields result in changes of atmospheric pressure at the nearest centres and to deformation of trajectories of their moving.

### Disclosure of the invention

The given way of influence on process of invention atmospheric circulation consists in the following.
It is known, that atmospheric air always contains a vaporous moisture, and both in usual environment, and in cloudless space therefore generated in an atmosphere and rising upwards ions, irrespective of cloudeness , are united and allocate a thermal energy not only at the expense of effect of condensation, but also at the expense of allocation of Joule heat at passage of an electrical current through thickness of atmospheric air, which is the flow of ions. It is known also, that the course of an electrical current through gas in closed volume results in its heating, and in open - to expansion (Granovskiy V.L. An electrical current in gas. Leningrad. 1952)
The expansion of air occurring at the expense of allocation of heat of condensation and electrical influence results in decrease of its density, so, to vertical moving along a flow of ions, that causes formation of a continuous and steady ascending flow (so-called cyclonic flow) both vertical it vertical and horizontal shifts of a wind. It in turn creates a condition for occurrence and development of jet current in troposphere at high-altitude levels of 6-10 km (Pic.1), which has strong property of weather formation (G.Rill, Allaka M.A., Jordan K.L. Etc. Jet current. Moscow. The foreign literature. 1959)

### Advantageous effects of the invention

The basic advantage of the invention is the opportunity to influence weather in the large territories, and it is not connected to the large technical problems and material inputs.

### Description of at least one way of carrying out the invention

As an example of a design of the device generating ion flow, the installation is offered which is applied to dispersion of a fog and low continuous cloudiness at the airports.
The installation (Pic.2) consists of radiating system occupying the area about one hectare, which represents a coronaforming electrode with large cells (15*20 M), consisting from thin wires(1). The electrode is raised above ground with the help of metal racks(2) supplied with isolators(3). On an electrode potential concerning ground moves high-voltage, about 50 kV(4).
( Pohmelnih L.A. The device for creation of a volumetric charge of Russian Federation W 4806214.)
As it was already marked above, during long electrical influence in troposphere there is a jet current. This phenomenon renders the large influence on circulating processes in an atmosphere. On distance of hundreds and thousand kilometers along an axis of jet current under the certain law there are zones of cyclonic and anticyclonic activity (Pic. 1).

Therefore initiation of jet current enables to influence a condition of weather in the large territories.
With the help of one installation generating ion flow, one jet current is initiated, which axis passes above installation, and its parameters thus as well as a direction, speed and height, depend on a meteorological background.
With connection of additional installations placed on a distance up to several hundreds of kilometers from first, it is possible to carry out influence on dynamic parameters of arising jet current, since the meteorological background in area of its passage gets more certain, stable character. To told it is necessary to add, that is possible not only management of jet current, but also creation of a controlled network of jet currents.

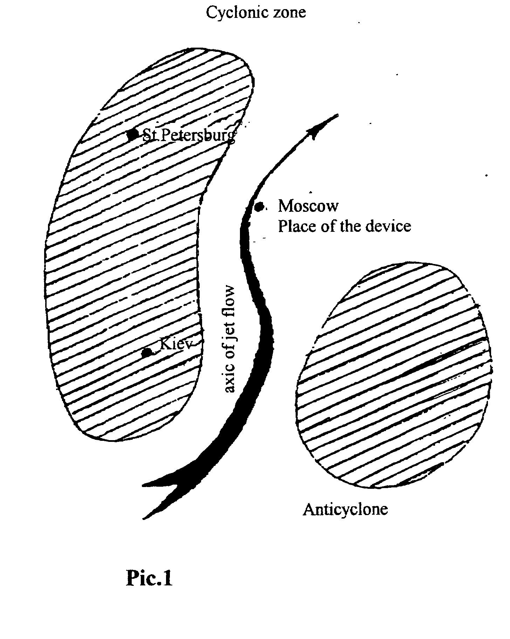

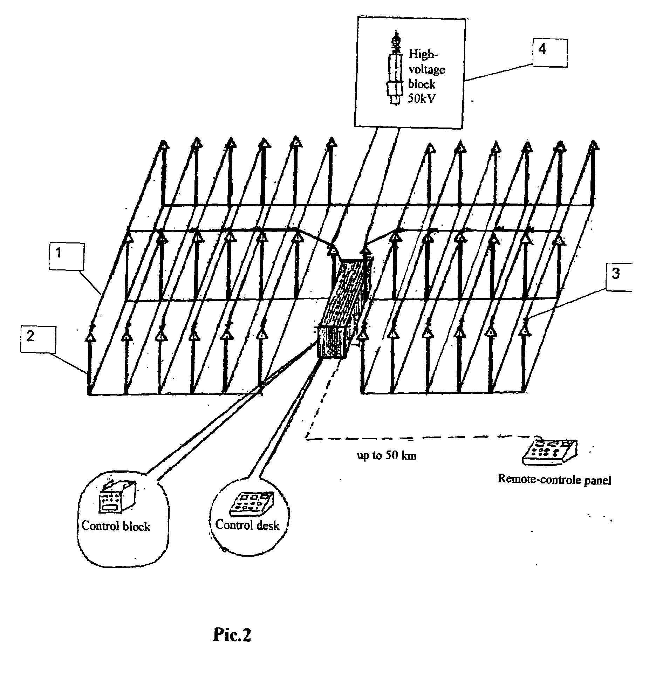

## Claims

1. The closest analogue on functional purpose(assignment) of the invention is the system of protection against hail developed in USSR in the sixtieth years (Bibilashvilly N.Sh. Etc. Management on organization and realization of works on antihail protection. Leningrad. Gidrometizdat. 1981)
Functionally system of antihail protection consists from seven permanently located of anti-aircraft rocket complexes intended for processing hail clouds by reagent, entered in them for prevention hail formation and network meteorological radiolocator , carrying out tracking occurrence, development and moving of hail clouds in a protected zone. The management of start-up of rockets is carried out from the regional centres of antihail protection on the basis of the analysis of meteorological data.
However this analogue is not considered in the given invention as the prototype by virtue of significant functional differences, since the offered system can be used for prevention of the dangerous phenomena of weather, such as hurricane, flood, droughts, wood fires etc. and also for formation in the given areas of necessary climatic conditions.
A way of influence on process of atmospheric circulation including course of an electrical current through thickness of atmospheric air, distinguished of themes, that in any meteorological conditions through thickness of atmospheric air within 3-120 hours pass a vertical flow of ions for formation in troposphere above item of influence of a vertical air flow, vertical and horizontal shifts of a wind and initiation of jet current.
The system for influence on process of atmospheric circulation distinguished of themes, that it contains a complex placed on land and by the sea on distance of several hundreds kilometers one from another, at least one of which is intended for formation of jet current in an atmosphere above the given region by means of generation of a vertical flow of ions, and others for management of dynamic parameters of the specified jet current by generation of additional vertical flows of ions, and also are available space means of supervision as satellites and centre of management for connection with satellite and installations generating flows of ions.
